(19) Europäisches Patentamt
European Patent Office
Office européen des brevets

(11) **EP 4 303 817 B1**

(12) **EUROPEAN PATENT SPECIFICATION**

(45) Date of publication and mention
of the grant of the patent:
**15.10.2025 Bulletin 2025/42**

(51) International Patent Classification (IPC):
***G06T 7/73*** (2017.01)          ***G06T 19/00*** (2011.01)
***G06V 10/82*** (2022.01)          ***G06V 20/20*** (2022.01)
***G06V 20/40*** (2022.01)

(21) Application number: **23182988.8**

(22) Date of filing: **03.07.2023**

(52) Cooperative Patent Classification (CPC):
**G06T 7/73; G06V 10/147; G06V 10/25;
G06V 10/54; G06V 10/82; G06V 20/20;**
G06T 2207/20081; G06T 2207/20084;
G06T 2207/30261

(54) **A METHOD AND AN APPARATUS FOR 360-DEGREE IMMERSIVE VIDEO**

VERFAHREN UND VORRICHTUNG FÜR IMMERSIVE 360-GRAD-VIDEOS

PROCÉDÉ ET APPAREIL POUR VIDÉO IMMERSIVE À 360 DEGRÉS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **07.07.2022 FI 20225638**

(43) Date of publication of application:
**10.01.2024 Bulletin 2024/02**

(73) Proprietor: **Nokia Technologies Oy
02610 Espoo (FI)**

(72) Inventors:
• **FASOGBON, Peter Oluwanisola**
33900 Tampere (FI)
• **YOU, Yu**
33180 Tampere (FI)
• **SZABO, Jozsef**
33560 Tampere (FI)

(74) Representative: **Berggren Oy**
**P.O. Box 16**
**Eteläinen Rautatiekatu 10A**
**00101 Helsinki (FI)**

(56) References cited:
**WO-A1-2021/105748     US-A1- 2011 234 584**

• **GAUDILLIERE VINCENT ET AL: "Perspective-2-Ellipsoid: Bridging the Gap Between Object Detections and 6-DoF Camera Pose", IEEE ROBOTICS AND AUTOMATION LETTERS, IEEE, vol. 5, no. 4, 27 June 2020 (2020-06-27), pages 5189 - 5196, XP011798866, DOI: 10.1109/LRA.2020.3005387**
• **ZINS MATTHIEU ET AL: "Object-Based Visual Camera Pose Estimation From Ellipsoidal Model and 3D-Aware Ellipse Prediction", INTERNATIONAL JOURNAL OF COMPUTER VISION, SPRINGER US, NEW YORK, vol. 130, no. 4, 7 March 2022 (2022-03-07), pages 1107 - 1126, XP037747798, ISSN: 0920-5691, [retrieved on 20220307], DOI: 10.1007/S11263-022-01585-W**

**Description**

Technical Field

The present solution generally relates to 360-degree immersive video, and in particular to object-based 3D aware overlays for 360-degree immersive video.

Background

Since the beginning of photography and cinematography, the most common type of image and video content has been captured by cameras with relatively narrow field of view and displayed as a rectangular scene on flat displays. The cameras are mainly directional, whereby they capture only a limited angular field of view (the field of view towards which they are directed).

More recently, new image and video capture devices are available. These devices are able to capture visual and audio content all around them, i.e., they can capture the whole angular field of view, sometimes referred to as 360 degrees field of view. More precisely, they can capture a spherical field of view (i.e., 360 degrees in all spatial directions). Furthermore, new types of output technologies have been invented and produced, such as head-mounted displays. These devices allow a person to see visual content all around him/her, giving a feeling of being "immersed" into the scene captured by the 360 degrees camera. The new capture and display paradigm, where the field of view is spherical, is commonly referred to as virtual reality (VR) and is believed to be the common way people will experience media content in the future.

A publication US 2011/234584 discloses a head-mounted display device comprising left and right camera units which have wide-angle lenses. The camera units capture an image of a real space, a left viewpoint image and a right viewpoint image. A main image is extracted from a central portion of each viewpoint image, and left and right sub-images are extracted from a peripheral portion of each viewpoint image. The main image is corrected, and displayed in front of the left and right eyes as a stereo image. The left and right sub-images are displayed on the left and right sides of the main image without being corrected.

A publication by Gaudilliere Vincent et al. "Perspective-2-Ellipsoid: Bridging the Gap Between Object Detections and 6-DoF Camera Pose" (27 June 2020) discloses a object-based pose estimation algorithm operating from at least two object detections and being based on a paradigm enabling to decrease the Degrees of Freedom from six to three.

A publication by Zins Matthieu et al. "Object-Based Visual Camera Pose Estimation From Ellipsoidal Model and 3D-Aware Ellipse Prediction" (7 March 2022) discloses an initial camera pose estimation from a single image. The solution detects improved elliptic approximations of objects which are coherent with the 3D ellipsoids in terms of perspective projection.

A publication WO 2021/105748 discloses virtual content units for extended reality. The extended reality (XR) system comprises obtaining an XR spatial mapping of a physical location; identifying a space within the XR spatial mapping to which the virtual content can be overlayed; associating the identified space with a unit identifier and transmitting the unit identifier to an system so that the space associated with the unit identifier is available to providers of virtual content.

Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

Description of the Drawings

In the following, various embodiments will be described in more detail with reference to the appended drawings, in which

Fig. 1a, b     show an example of 2D content overlay and different overlay types;

Fig. 2     shows an example of spherical/polar coordinates representation for fisheye transformation to equirectangular;

Fig. 3     shows a general illustration of steps for overlay;

Fig. 4      shows an example of an object-based depth estimation and normal estimation;

Fig. 5      shows an example of distortion removal on fisheye images; a

Fig. 6      show an example of inferring depth for a single image using ellipse-ellipsoid constraint; ;

Fig. 7a, b    show an example of inferring depth for a single image using ellipse-ellipsoid constraint;

Fig. 8a, b    show examples of an embedding mask and the mask projected on cropped image;

Fig. 9      shows an example of training data labeling;

Fig. 10     is a flowchart illustrating a method according to an embodiment; and

Fig. 11     shows an apparatus according to an embodiment.

Description of Example Embodiments

The following description and drawings are illustrative and are not to be construed as unnecessarily limiting. The specific details are provided for a thorough understanding of the disclosure. However, in certain instances, well-known or conventional details are not described in order to avoid obscuring the description. References to one or an embodiment in the present disclosure can be, but not necessarily are, reference to the same embodiment and such references mean at least one of the embodiments.

Reference in this specification to "one embodiment" or "an embodiment" means that a particular feature, structure, or characteristic described in connection with the embodiment is included in at least one embodiment of the disclosure.

Users may consume both videos and images as visual content. However, the consumption of videos and images have been independent on each other. The recent development of applications - such as immersive multimedia - has enabled new use cases where users consume both videos and images together. Immersive multimedia - such as omnidirectional content consumption - is more complex for the end user compared to the consumption of 2D content. This is due to the higher degree of freedom available to the end user (e.g., three degrees of freedom for yaw, pitch, and roll). This freedom also results in more uncertainty.

As used herein the term "omnidirectional" may refer to media content that has greater spatial extent than a field-of-view of a device rendering the content. Omnidirectional content may for example cover substantially 360 degrees in the horizontal dimension and substantially 180 degrees in the vertical dimension, but omnidirectional may also refer to content covering less than 360 degree view in the horizontal direction and/or 180 degree view in the vertical direction.

The MPEG Omnidirectional Media Format (OMAF) v1 standardized the omnidirectional streaming of single three-degrees of freedom (3DoF) content (where the viewer is located at the centre of a unit sphere and has three degrees of freedom (Yaw-Pitch-Roll). OMAF version 2 was published in July 2021. Among other things, OMAF v2 includes means to optimize the Viewport Dependent Streaming (VDS) operations, overlay management and bandwidth management. OMAF version 3 is close to completion, and it includes, among other things, a specific profile for the Versatile Video Coding (VVC).

A viewport may be defined as a region of omnidirectional image or video suitable for display and viewing by the user. A current viewport (which may be sometimes referred simply as a viewport) may be defined as the part of the spherical video that is currently displayed and hence is viewable by the user(s). At any point of time, a video rendered by an application on a head-mounted display (HMD) renders a portion of the 360-degrees video, which is referred to as a viewport. Likewise, when viewing a spatial part of the 360-degree content on a conventional display, the spatial part that is currently displayed is a viewport. A viewport is a window on the 360-degree world represented in the omnidirectional video displayed via a rendering display. A viewport may be characterized by a horizontal field-of-view (VHFoV) and a vertical field-of-view (VVFoV).

Term "overlay" refers to a visual media that is rendered over 360-degree video content.

Videos and/or images may be overlaid on an omnidirectional video and/or image. The coded overlaying video can be a separate stream or part of the bitstream of the currently rendered 360-degree video/image. A omnidirectional streaming system may overlay a video/image on top of the omnidirectional video/image being rendered. The overlaid two-dimensional video/image may have a rectangular grid or a non-rectangular grid. The overlaying process may cover the overlaid video/image or a part of the video/image or there may be some level of transparency/opacity or more than one level of transparency/opacity wherein the overlaid video/image may be seen under the overlaying video/image but with less brightness. In other words, there could be an associated level of transparency corresponding to the video/image in a foreground overlay and the video/image in the background (video/image of VR scene). The terms opacity and transparency may be used interchangeably.

The overlaid region may have one or more than one levels of transparency. For example, the overlaid region may have different parts with different levels of transparency. In accordance with an embodiment, the transparency level could be defined to be within a certain range, such as from 0 to 1 so that the smaller the value the smaller is the transparency, or vice versa.

Additionally, the content provider may choose to overlay a part of the same omnidirectional video over the current viewport of the user. The content provider may want to overlay the video based on the viewing condition of the user. For example, overlaying may be performed, if the user's viewport does not match the content provider's recommended viewport, where the recommended viewport is determined by the content creator. In this case, the client player logic overlays the content provider's recommended viewport (as a preview window) on top of the current viewport of the user. It may also be possible to overlay the recommended viewport, if the user's current viewport does not match, such that the position of the overlaid video is based on the direction in which the user is viewing. For example, overlaying the recommended viewport to the left of the display, if the recommended viewport is to the left of the user's current viewport. It may also be possible to overlay the whole 360-degree video. Yet another example is to use the overlaying visual information as a guidance mechanism to guide the user towards the recommended viewport, for example guiding people who are hearing impaired.

There may be one or more conditions on when and how to display the visual overlay. Therefore, a rendering device may need to receive information which the rendering device may use to perform the overlaying as indicated by the signaled information.

One or more overlays may be carried in a single visual media track or a single image item. When more than one overlay is carried in a single track or image item, or when an overlay is carried with other media (e.g. background), a mapping of regions from the samples of the track or the image item to the overlay metadata may be provided, e.g. in or associated with the OverlayStruct.

When several tracks or image items are collectively carrying one or more overlays and/or the background visual media, a group of the tracks and image items may be indicated in a container file.

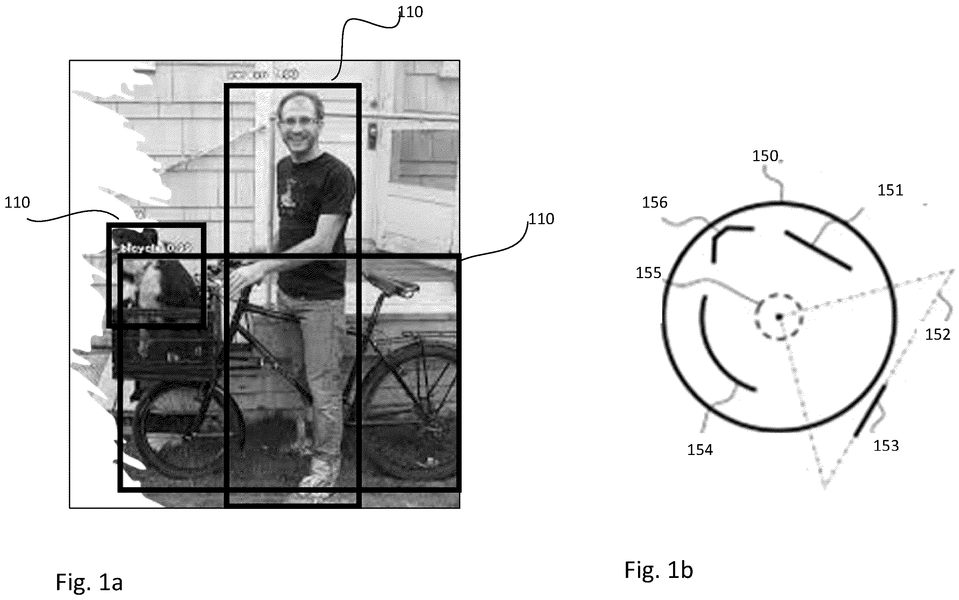

Classic two-dimensional (2D) content overlays can be added to annotate detected objects around the detected 2D bounding boxes from generic object detectors like YOLO detector, etc. The content overlays can be placed as in the 2D image with some pixel offsets from the bounding boxes 110 as shown in Figure 1a.

It is known that overlays can be used for multiple purposes, including but not limited to the following:

- annotations of the content; for instance, stock tickers and player statistics of sports games;
- recommended viewport for the content, for example, giving an end-user a possibility to follow the director's intent while having the freedom to peek freely around;
- in addition, overlays can provide 2D video or image close-ups of the omnidirectional video or image on the background;
- can provide hotspots for switching viewpoints interactively;
- displaying a logo of the content provider;
- displaying a semi-transparent watermark on top of the content;
- advertisements.

OMAF defines several types of overlays as shown in Figure 1b. The overlay types can be a sphere-relative 2D overlay 151; viewport-relative overlay 153; sphere relative omnidirectional overlay 154; sphere-relative 3D mesh overlay 156. Figure 1b also shows a viewport 152, a viewing space 155 and a background visual media on the unit sphere 150.

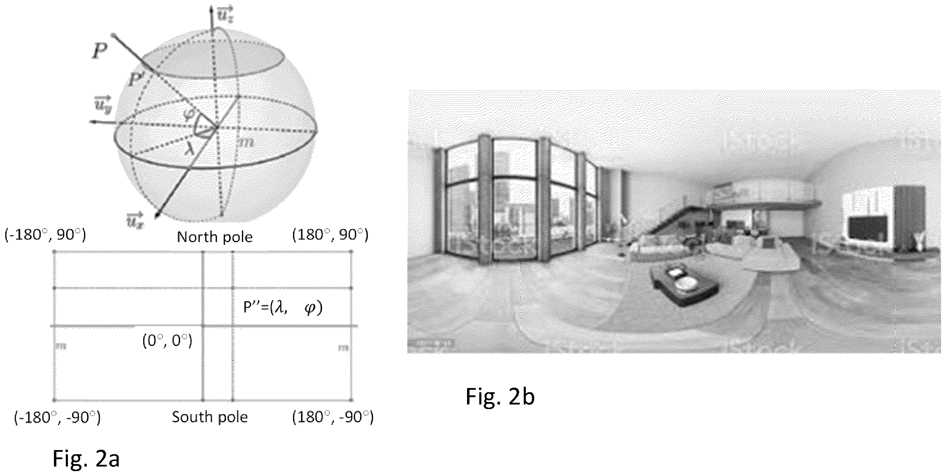

2D content overlay limits possibilities and realism that the user can experience for 360 immersive media, whereby 3D content overlay method is to be examined. Figure 2b illustrates an equirectangular image which has been derived from a fisheye image represented in the spherical/polar coordinate in Figure 2a.

It is appreciated that overlaying some objects requires understanding of the depths and/or orientation with respect to the viewing orientation, to reach its utmost capability defined in the OMAF. In addition, the multiple overlays could require the sense of depth to reproduce a close-to-reality immersive experience, e.g., front overlays can be present in front of farther overlays.

There are two main approaches that can be used for content overlay: 1) one based on motion/camera tracking; and 2) another based on motion control. The motion/camera tracking approach involves placing of multiple non-coplanar fixed points in the scene, which are then traced, and from which it is possible to extrapolate the position of the camera within the scene. This information can then be fed into a virtual camera used to generate the output from the 3D model such that when the 3D model output is superimposed over the video, the movements match well. In addition, the motion control approach is similar with the former but uses a special camera rig to either track the camera movement exactly or to reproduce a movement exactly as in real life. The later approach is the more precise approach, but also much more sophisticated since it requires a more elaborated head mounted device. It allows a more accurate tracking of things, like a change in zoom verses moving the camera in (which are otherwise only evident by subtle shifting of perspective and vanishing points). The result of both approaches is effectively similar if done properly. This results in a data on how the camera moves in the real-life scene and it matches the movement done in the 3D scene. There are other factors such a lighting that also must be matched for the best-looking composition. Then both outputs are brought into a composition package where they can be overlaid and blended.

These approaches do not work well if anything in the real scene is continuously moving. To deal with this problem will require some additional tasks that may not lead to end-end type of a system and easy to setup. Prior approach for doing this, could relate to use of a mask layer. This may be produced by rotoscoping, which is a process of updating the image on every frame to follow the subject. The mask then tells the compositing software that the real video plate should be placed over the 3D plate on the areas where the mask is painted. Otherwise, the 3D plate is used over the real plate. Alpha channel blending is used to convey information about the transparency of a 3D shape such that the image behind it can be visible.

Popular image-based methods use Motion/Camera tracking such that multiple non-coplanar fixed points in the scene are tracked and from that it is possible to extrapolate the position of the camera within the scene. This information can then be fed into a virtual camera used to generate the output from the 3D model such that when the 3D model output is superimposed over the video, the movements align well. To track the non-coplanar points, it is required to have the source camera moving or have multiple cameras that have high-level of overlapping regions. This assumption is very restrictive since often the camera devices are not moving and have quite low overlap between devices.

The purpose of the present embodiments is to focus on viewport-relative overlay but can be used to other overlay types. In addition, the focus is on image-based approach to content overlay. The present embodiments relate to a method for determining the overlay positions from stitched 360 or original multi-fisheye video. The method uses object-based three-dimensional (3D) aware overlay from a single image using a single fisheye camera. The advantage of the single image is that most application for 360 degrees may not provide large enough overlapping between the multi-fisheye devices. The advantage of the object-based 3D aware overlay is that it allows high-level possibilities for various overlays. Thus, such a solution makes it possible to generate all different types of overlays in OMAF. Object-based processing allows to estimate depth from a single image without need to establish exhaustive correspondence between multi-fisheye devices.

The present embodiments provide depth estimation from single image using ellipse-ellipsoid constraint, and also embedding loss function to support the constraint, as well as object-viewport pose estimation. As a result, an object-specific 3D normal estimation is obtained. These embodiments are used to create 3D overlay in 360 immersive videos. It is assumed that in most applications, devices are stable and no way exhibiting correspondence or camera motion for depth estimation or camera pose.

## 3D OVERLAY

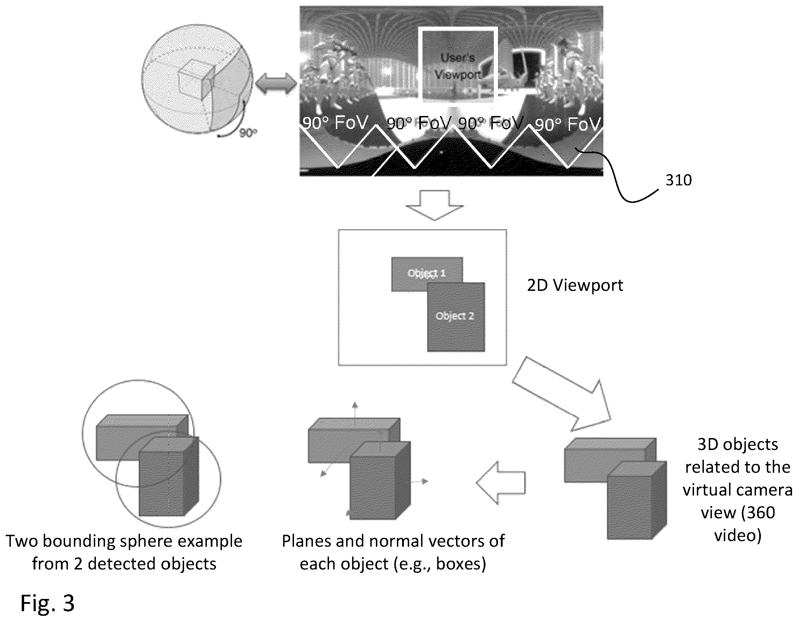

Figure 3 illustrates an example of generation of one rectified viewport based on user's view orientation. This is enabled by the Field-of-View (FoV) 310, which can be used to determine the camera parameters using standard pinhole camera model. In addition, the geometric features (2D bounding boxes to 3D geometries with estimated depth information). These bounding boxes of the objects can be determined using generic object detector. Finally, the appropriate rendering placements (e.g., dominant/visible planes) with normal vectors of the detected objects can be determined.

According to the embodiment, the output of the method is a collection of recommended planes per detected objects. In another embodiment, the output may be the bounding sphere or the bounding boxes, or other type of bounding volume, of the detected objects, so that the overlays can use that output information to determine the best placement for rendering the multimedia overlays inside a unit sphere, where the 360 video is rendered. Figure 3 illustrates the importance of depth estimation for the 3D overlay task. Thereafter, 3D sphere bounding box and/or planes and/or normal carry the information that is needed for a proper overlay.

## SYSTEM ARCHITECTURE

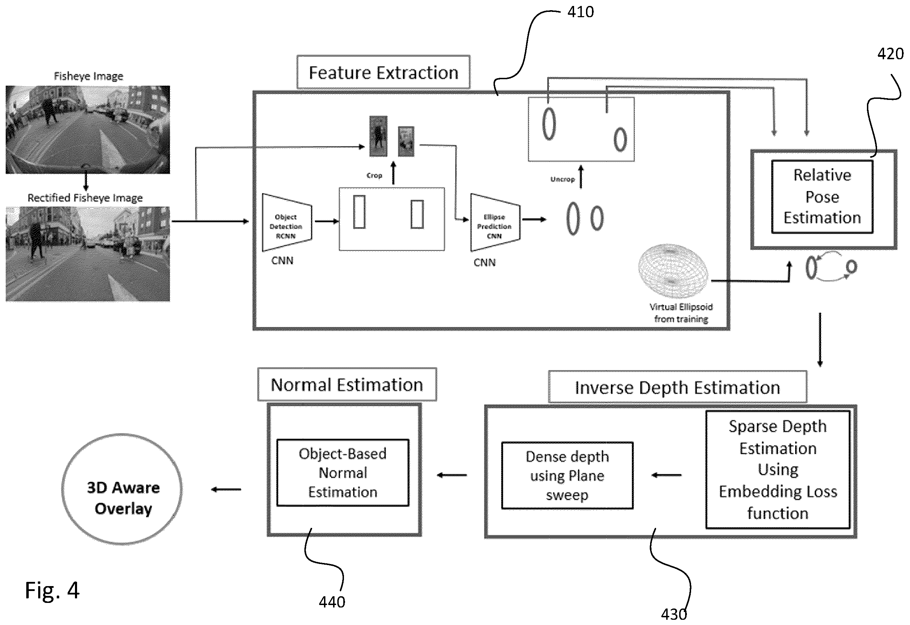

Figure 4 illustrates a system architecture for the object-based 3D aware overlays for 360-degree immersive system in a very general manner. For simplicity, the example architecture has been split into four main parts, which are 1) feature extraction 410; 2) relative pose estimation 420; 3) inverse depth estimation 430; and 4) normal estimation 440. The method according to an embodiment combines convolutional neural network for the feature extraction 410 while the remaining part 420 - 440 is based on computer vision methods. These two strategies are combined together to create an end-end system. The four main parts are discussed in more detailed manner in the following:

1. Feature Extraction

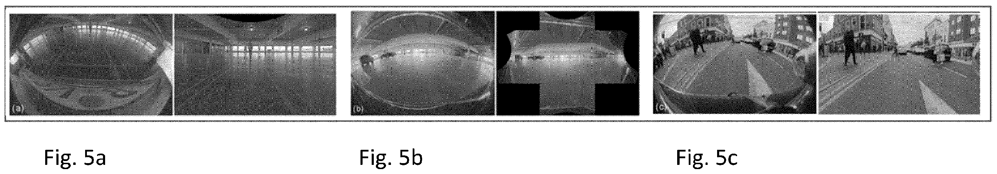

Feature extraction is carried out by a respective computer module. The input to this module is a rectified fisheye image, in which the lens distortion has been removed or rectified. There are several methods in the literature for distortion removal which can be used. Figure 5 illustrates various popular examples of fisheye image correction methods using distortion parameters that are estimated at a pre-calibration step. These methods comprise e.g., a rectilinear correction (Figure 5a); a piecewise linear correction (Figure 5b); and a cylindrical correction (Figure 5c).

The corrected fisheye image is passed through the feature module. In that module, objects are detected using RCNN and/or other Faster-RCNN improvements in Machine Learning Field, and ellipse predicted within the bounding volume (e.g., a bounding box) of the detected object. The virtual ellipsoid is defined during the training stage, and later passed together with ellipses to the next module that will estimate the initial relative poses.

2. Relative pose estimation

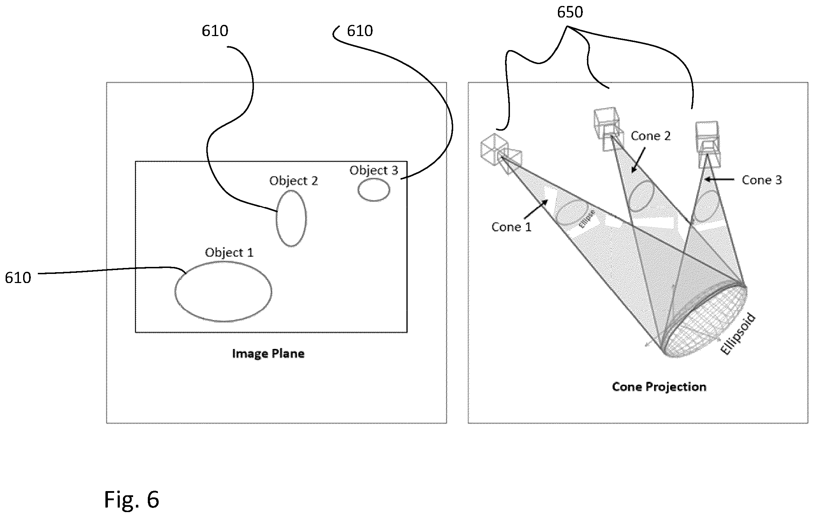

The present embodiments use Ellipsoid-Ellipse constraint for object-object relative pose estimation. An Ellipsoid is used to approximate a virtual 3D object, while Ellipse is used to approximate its image projection. This contrasts with key-point-based methods, where points have no shape but just a coordinate location. The generated representation has a shape both in 3D image (i.e., ellipsoid) and in 2D image (i.e., ellipse). The computation of the camera pose from pairs of ellipse-ellipsoid comes down to aligning their respective back-projection and projection cones as shown in Figure 6. In Figure 6, three objects 610 in the same image can be otherwise represented with three different cameras 650 representing viewpoints, such that each viewpoint create individual cone for the object. With this representation, one can assume that each object has the same virtual ellipsoid but different camera extrinsic parameters (i.e., rotation and translation). This representation using ellipse-ellipsoid constraint (i.e., geometric constraint) relieve the solution of ill-pose constraint that is inherent in single image depth estimation.

Ideally, the detected ellipse in the image should correspond to the intersection between the projection cone of the ellipsoid and the image plane. The accuracy is heavily influenced by how much the ellipse detection satisfies the real projection of the ellipsoid. Then estimating object-object relative pose comes down to Perspective-n-Point (PnP) pose problem in computer vision.

3. Inverse Depth estimation

After the initial relative poses, such as object-object poses and objects-ellipsoid poses has been determined, the next steps comprise determining depth for relevant objects detected in the scene where the pose is defined. The 3D scene point problem is formulated using inverse depth parametrization done as a part of an optimization procedure with Levenberg Marquardt . This is also known as a bundle adjustment problem in computer vision. The advantage of using inverse depth parameterization is to reduce the complexity of the cost function in the optimization problem and regularization of the scales of the variables in the bundle adjustment.

At first one of the ellipse-ellipsoid is denoted as a reference object, and the remaining objects are denoted as non-reference objects. Given initial camera parameters, pose parameters and randomly initialized depth points, these are passed through the formulated optimization procedure which minimizes a reprojection error between the reference and the non-reference objects while also refining both the camera parameters, object pose relations and the inverse depth value.

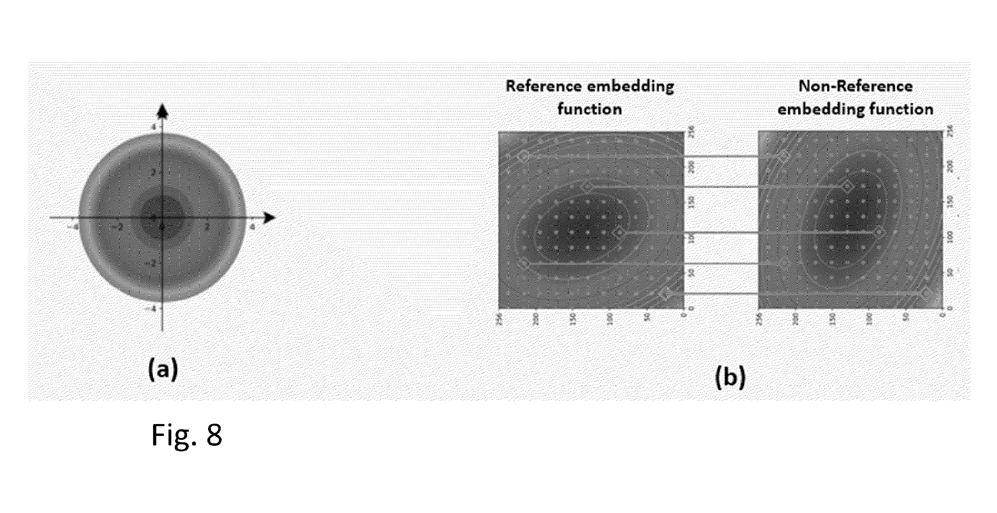

In addition, the use of direct pixels corresponding to the ellipse as features in the optimization reprojection error does not perform sufficiently. The extraction is not trivial and thus may end in a bad optimization. Due to this reason, an embedding mask is provided, wherein the embedding mask is based on signed distance function which allows extracting meaningful features around the ellipse. A Signed Distance Function (SDF) is defined to the closest ellipse contour point (referring to the Figure 8). The use of embedding function allows more accurate image sampling using mask along SDF contours.

Finally, given the optimized "sparse" depth points corresponding to some features extracted on the contour of the ellipse, a popular plane sweeping method in computer vision field can be used to create dense depth on those objects. The required inputs are estimated parameters, i.e., inverse depth points $w_j$ and camera intrinsic parameter and extrinsic pose estimation.

4. Normal estimation

Object-based normal estimation can be implemented as follows:

- loading points belonging to an object (inside detected ellipse);

- extracting their corresponding "sparse" inverse depth or "dense" inverse depth from using plane sweep algorithm;
- estimating their normal using nearest neighbor search with covariance analysis algorithm;
- selecting a normal that aligns well towards the viewport:

  o multiple normals on an object are available.

According to another embodiment, a single best plane can be fitted to the depth points. Thereafter, one can overlay parallel to any of the three positive axis (X, Y, Z) based on the viewers viewpoint.

The present embodiments are discussed in more detailed manner in the following.

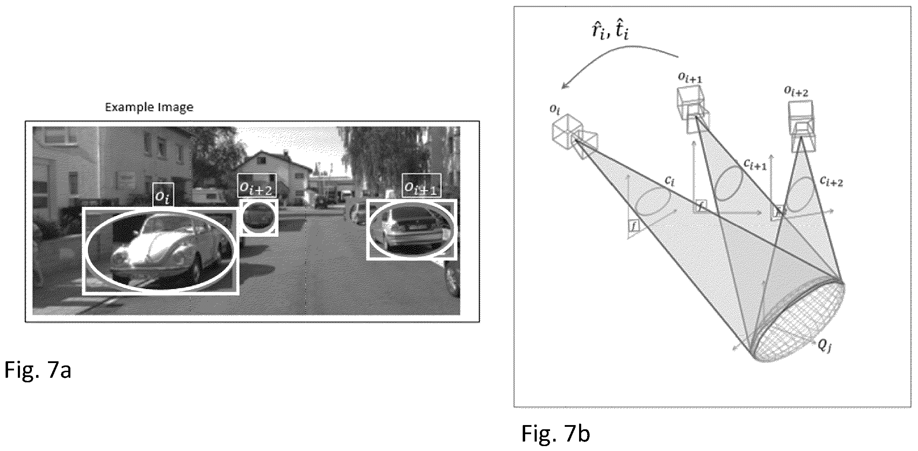

Figures 7a, 7b illustrate an example, wherein depth for a single image is inferred by using ellipse-ellipsoid constraint. In Figure 7a it is assumed that each conic $c$ has different image plane but same focal length $f$ just for illustration purpose. In reality, conic projects on the same image as shown in Figure 7b. In Figure 7b $o$ refers to camera center; $c$ refers to ellipse; $q$ refers to world coordinate virtual ellipsoid; and $\hat{r}_i$, $\hat{t}_i$ refer to initial relative pose parameters.

**Relative pose estimation:**

Measuring camera orientation from image is easier in general to perform than estimating the position. In the first case, assuming the orientation of the camera is known (e.g., by use of GPS (Global Positioning System)). Then a closed form solution makes it possible to deduce camera position from a single ellipse-ellipsoid pair. A RANSAC procedure with minimal sets of one ellipse-ellipsoid pair is used to have the best outcome. In the second case, assuming the orientation of the camera is not known, whereupon two ellipse-ellipsoid pairs are at least required to compute the pose, followed by RANSAC with minimal sets of two correspondences.

Initial relative pose $\hat{r}_i$, $\hat{t}_i$ to the reference frame can be estimated using Perspective-n-Point (PnP). From ellipse-ellipsoid pairs a constraint on all object is determined by assuming that a focal length $f$ is the same. In the implementation, the first camera is defined as the reference plane, such that $i=0$, so that all non-reference planes $i=1, ..., n$ are relative to reference plane.

**Inverse depth estimation:**

For the depth estimation from a single image using Ellipse-Ellipsoid constraint, focal length $f$ is defined. The radial distortion function $F(.)$ can be written as equation (Eq. 1). Other forms of distortion such as fisheye and entrance pupil can also be used.

$$F(.) = 1 + k_1\|.\|^2 + k_2\|.\|^4 ... \text{ (Eq. 1)}$$

Distorted ellipse pixels $u_{ij}$, the undistorted pixel is then $u_{ij}\, F\left(\frac{u_{ij}}{f}\right)$. If for the reference image, the back-projection of the feature $u_{ij}$ to its 3D coordinates $Q_j$ is parameterized using its inverse depth $w_j$ by:

$$Q_j = \begin{bmatrix} \frac{u_{ij}}{fw_j}\, F\left(\frac{u_{ij}}{f}\right) \\ \frac{1}{w_j} \end{bmatrix} ... \text{ (Eq. 2)}$$

**Projection** function $\pi(.)$ is used to project $Q_j$ onto the i-th image plane as $q_i \equiv \pi(Q_j, \bar{r}_i, \bar{t}_i)$:

$$q_i \equiv \pi(Q_j, \bar{r}_i, \bar{t}_i) = \langle \bar{R}(\bar{r}_i)Q_j + \bar{t}_i \rangle ... \text{ (Eq. 3)}$$

$$\bar{R}(\bar{r}_i) = \begin{bmatrix} 1 & -\bar{r}_{i,3} & \bar{r}_{i,2} \\ \bar{r}_{i,3} & 1 & -\bar{r}_{i,1} \\ -\bar{r}_{i,2} & \bar{r}_{i,1} & 1 \end{bmatrix} ... \text{ (Eq. 4)}$$

$$q: \langle [x,\, y,\, z]^T \rangle = [x/z,\, y/z]^T ... \text{ (Eq. 5)}$$

where, $\bar{r}_i$, $\bar{t}_i$ are tiny relative rotation and translation (respectively) from the reference image to the i-th image plane; $\{\bar{r}_{i,1}\bar{r}_{i,2}, \bar{r}_{i,3}\}$ are the elements of $\bar{r}_i$; and $\bar{R}$ is the vector-to-matrix function that transforms the rotation vector $\bar{r}_i$ into the small-angle-approximated rotation matrix.

According to another embodiment, $\hat{r}_i$, $\hat{t}_i$ can be directly plugged to $\bar{r}_i$, $\bar{t}_i$. Alternatively, $q_{i+1}$ can be transformed to $q_i$ once by using $\hat{r}_i$, $\hat{t}_i$, after which $\bar{r}_i$, $\bar{t}_i$ can be randomly initialized by assuming tiny relative transformations.

The undistorted image domain coordinates of the projected point are then calculated as

$$f\pi \left( Q_j, \bar{r}_i, \bar{t}_i \right) \dots \text{(Eq. 6)}$$

Direct use of raw ellipse pixels $u_{ij}$ and $f\pi \left( Q_j, \bar{r}_i, \bar{t}_i \right)$ for bundle adjustment reprojection error minimization will not perform well. Therefore, embedding function Ø[. ] is defined using Signed Distance Function (SDF) to closest ellipse contour point (reference to Figure 8, where $j$ is the number of sampled points on embedding function). The use of embedding function allows more accurate image sampling using mask along SDF contours.

Finally, the bundle adjustment is formulated to minimize the reprojection errors of all the embedding function features in the non-reference images by:

$$\frac{argmin}{K,\bar{r}_i,\bar{t}_i,w} \sum_{i=1}^{n-1} \sum_{j=0}^{m-1} \rho \left( \emptyset \left[ u_{ij} F \left( \frac{u_{ij}}{f} \right) \right] - \emptyset \left[ f\pi \left( Q_j, \bar{r}_i, \bar{t}_i \right) \right] \right) \dots \text{(Eq. 7)}$$

where $n$ is the number of images, $m$ the number of features, $\rho(\cdot)$ the element-wise Huber loss function, $K$ the set of the intrinsic camera parameters $\{f, k1, k2\}$, ($\bar{r}_i$, and $\bar{t}_i$) are the sets of rotation and translation vectors for the non-reference images, and $w$ are the inverse depth values. The intrinsic parameters focal length is initialized using ($W/2$), where $W$ is the image width.

**Virtual Ellipsoid and training data generation:**

The training data generation is inspired by ellipse-ellipsoid prediction and extraction in publication "M. Zins, G. Simon and M. O. Berger, "3D-Aware Ellipse Prediction for Object-Based Camera Pose Estimation," 2020 International Conference on 3D Vision (3DV), 2020, pp. 281-290" and implicit subspace constraint solution for 3D localization in publication "Cosimo Rubino; Marco Crocco; Alessio Del Bue, "3D Object Localisation from Multi-View Image Detections, "2018 IEEE Transactions on Pattern Analysis and Machine Intelligence ( Volume: 40, Issue: 6, June 1 2018)"

An approach in cited publication is followed to generate both training image and virtual ellipsoid in a single procedure. As a result, an ellipsoid, ground truth bounding boxes (BB) (or bounding volumes) and ellipses in all training images are extracted by labeling a few boxes in a small number of them. The procedure may comprise the following:

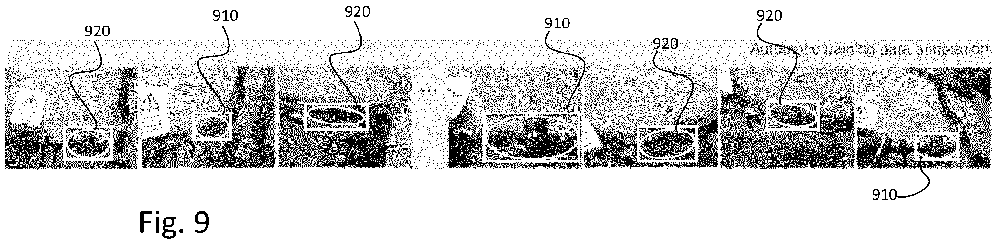

- Assuming a calibrated fisheye device with fisheye distortion parameters available, wherein the fisheye images are first rectified using rectilinear correction;
- selecting at the minimum three rectified images of the scene showing the object(s) from various viewing angles;
- defining bounding boxes (BB) around the visible objects (boxes 910 in Figure 9) and associating a label to each bounding box;
- fitting 2D ellipses to these boxes with axes parallel to those of the bounding boxes;
- building the ellipsoid cloud from the 2D ellipses and projection matrices using implicit subspace constraint solution;
- reprojecting the ellipsoid cloud in all training images by using the ground truth projection matrices:

  ○ the obtained ellipses (ellipses 920 in Figure 9) issued as ground truth data for training the ellipse prediction CNN.

According to another embodiment, if needed, the BBs of the projected ellipses (ellipses 920 Figure 9) will be used as ground truth BBs to fine-tune the object detection CNN.

It is appreciated that from experiments, the ellipsoid size and orientation may vary significantly without degrading the method performance. This is due to the fact that the ellipsoids are only intermediate data used to calculate the pose form the detected ellipses. The only critical point is that the ellipsoids used to generate the training data must be those used at runtime to compute the pose.

To summarize the reasons for using Ellipsoid-Ellipse pair in the present solution:

- there is no need for a constantly moving camera, so estimating depth from a single image is vital in current application;
- known solutions for determining depth from single images are not reliable;
- projection of ellipse around objects provides a constraint for a single image pose estimation problem. For example, ellipse-ellipsoid cone can be used to mimic different camera viewpoints;

- training data for ellipsoid-ellipse can be trained on a few images, for example five images. This is attractive since global approaches, such as PoseNet, require huge amount of training data, applied on a whole image instead of patches.

- a full object can be described with only 9 parameters (for the ellipsoid) with, potentially, one additional semantic attribute (i.e., the class of the object) which makes the scene model very compact and lightweight. This allows defining object-specific overlay types, and still not complicating the system.

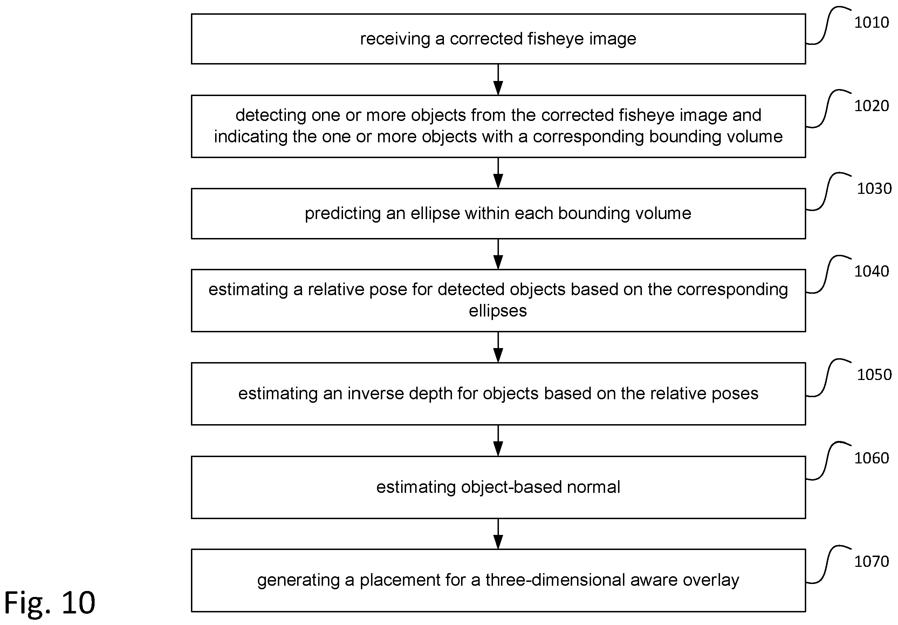

The method according to an embodiment is shown in Figure 10. The method generally comprises receiving 1010 a corrected fisheye image; detecting 1020 one or more objects from the corrected fisheye image and indicating the one or more objects with a corresponding bounding volume; predicting 1030 an ellipse within each bounding volume; estimating 1040 a relative pose for detected objects based on corresponding ellipses; estimating 1050 an inverse depth for objects based on the relative poses; estimating 1060 object-based normal; and generating 1070 a placement for a three-dimensional aware overlay. Each of the steps can be implemented by a respective module of a computer system.

An apparatus according to an embodiment comprises means for receiving a corrected fisheye image; means for detecting one or more objects from the corrected fisheye image and means for indicating the one or more objects with a corresponding bounding volume; means for predicting an ellipse within each bounding volume; means for estimating a relative pose for detected objects by means for the corresponding ellipses; means for estimating an inverse depth for objects based on the relative poses; means for estimating object-based normal; and means for generating a placement for a three-dimensional aware overlay. The means comprises at least one processor, and a memory including a computer program code, wherein the processor may further comprise processor circuitry. The memory and the computer program code are configured to, with the at least one processor, cause the apparatus to perform the method of Figure 10 according to various embodiments.

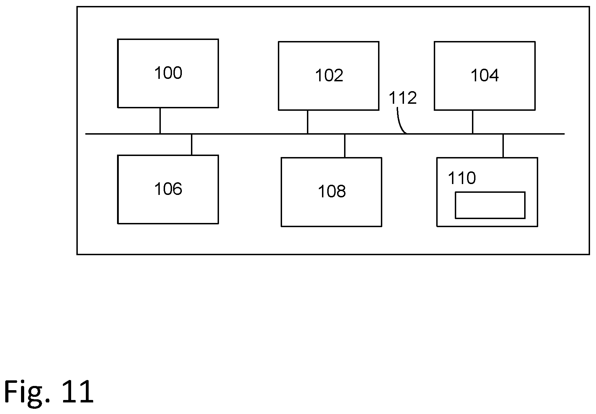

An example of a data processing system for an apparatus is illustrated in Figure 11. Several functionalities can be carried out with a single physical device, e.g., all calculation procedures can be performed in a single processor if desired. The data processing system comprises a main processing unit 100, a memory 102, a storage device 104, an input device 106, an output device 108, and a graphics subsystem 110, which are all connected to each other via a data bus 112.

The main processing unit 100 is a conventional processing unit arranged to process data within the data processing system. The main processing unit 100 may comprise or be implemented as one or more processors or processor circuitry. The memory 102, the storage device 104, the input device 106, and the output device 108 may include conventional components as recognized by those skilled in the art. The memory 102 and storage device 104 store data in the data processing system 100.

Computer program code resides in the memory 102 for implementing, for example a method as illustrated in a flowchart of Figure 10 according to various embodiments. The input device 106 inputs data into the system while the output device 108 receives data from the data processing system and forwards the data, for example to a display. The data bus 112 is a conventional data bus and while shown as a single line it may be any combination of the following: a processor bus, a PCI bus, a graphical bus, an ISA bus. Accordingly, a skilled person readily recognizes that the apparatus may be any data processing device, such as a computer device, a personal computer, a server computer, a mobile phone, a smart phone, or an Internet access device, for example Internet tablet computer.

The various embodiments can be implemented with the help of computer program code that resides in a memory and causes the relevant apparatuses to carry out the method. For example, a device may comprise circuitry and electronics for handling, receiving, and transmitting data, computer program code in a memory, and a processor that, when running the computer program code, causes the device to carry out the features of an embodiment. Yet further, a network device like a server may comprise circuitry and electronics for handling, receiving, and transmitting data, computer program code in a memory, and a processor that, when running the computer program code, causes the network device to carry out the features of various embodiments. If desired, the different functions discussed herein may be performed in a different order and/or concurrently with other. Furthermore, if desired, one or more of the above-described functions and embodiments may be optional or may be combined.

It is also noted herein that while the above describes example embodiments, these descriptions should not be viewed in a limiting sense. Rather, there are several variations and modifications, which may be made without departing from the scope of the present disclosure as, defined in the appended claims.

**Claims**

**1.** An apparatus, comprising

means for receiving (1010) a rectified fisheye image;
means for detecting (1020) one or more objects from the rectified fisheye image and indicating the one or more objects with a corresponding bounding volume;
means for predicting (1030) an ellipse within each bounding volume;
means for estimating (1040) a relative pose for each of the detected one or more objects based on the corresponding ellipses using ellipsoid-ellipse constraint wherein a projection cone of an ellipsoid is used to approximate a virtual three-dimensional object and an ellipse approximates an image plane for the virtual three-dimensional object;
means for estimating (1050) an inverse depth for said one or more objects based on the relative poses;
means for estimating (1060) an object-based normal comprising

means for loading points belonging to an object;
means for extracting corresponding inverse depth of the points;
means for estimating a normal for each of the points using nearest neighbor search with covariance analysis algorithm; and
means for selecting a normal that aligns towards a viewer's viewpoint from multiple estimated normals of an object; and

means for generating (1070) a placement for a three-dimensional aware overlay based on the selected normal.

2. The apparatus according to claim 1, further comprising one or more convolutional neural network for performing the object detection.

3. The apparatus according to claim 1 or 2, wherein the rectified fisheye image is a fisheye image where a lens distortion has been rectified or removed.

4. The apparatus according to any of the claims 1 to 3, further comprising means for generating an embedding mask based on a distance function to extract features around the ellipse.

5. The apparatus according to any of the claims 1 to 4, further comprising means for measuring a position of a camera, and means for using the position of the camera in estimating the relative pose.

6. The apparatus according to any of the claims 1 to 5, wherein the apparatus has been trained with a training data being generated by

means for rectifying fisheye images;
means for selecting a set of rectified fisheye images of a scene showing objects from various viewing angles;
means for defining bounding volumes around visible object and for associating a label to each bounding volume;
means for fitting ellipses to the bounding volumes, wherein an ellipse has an axis parallel to a corresponding bounding volume; means for building an ellipsoid cloud from the ellipses and projection matrices; and
means for reprojecting the ellipsoid cloud in all training images by using ground truth projection matrices, wherein ellipses represent ground truth data for training ellipse prediction neural network.

7. The apparatus according to claim 6, further comprising means for finetuning an object detection by using the defined bounding volumes as ground truth.

8. The apparatus according to any of the claims 1 to 7, wherein the bounding volume is a bounding box.

9. A method, comprising:

receiving (1010) a rectified fisheye image;
detecting (1020) one or more objects from the rectified fisheye image and indicating the one or more objects with a corresponding bounding volume;
predicting (1030) an ellipse within each bounding volume;
estimating (1040) a relative pose for each of the detected one or more objects based on corresponding ellipses using ellipsoid-ellipse constraint wherein a projection cone of an ellipsoid is used to approximate a virtual three-dimensional object and an ellipse approximates an image plane for the virtual three-dimensional object;
estimating (1050) an inverse depth for said one or more objects based on the relative poses;
estimating (1060) an object-based normal comprising

loading points belonging to an object;
extracting corresponding inverse depth of the points;
estimating a normal for each of the points using nearest neighbor search with covariance analysis algorithm; and

selecting a normal that aligns towards a viewer's viewpoint from multiple estimated normals of an object; and

generating (1070) a placement for a three-dimensional aware overlay based on the selected normal.

10. The method according to claim 9, wherein object detection is performed by one or more convolutional neural networks.

11. The method according to claim 9 or 10, wherein the method has been trained with a training data being generated by

rectifying fisheye images;
selecting a set of rectified fisheye images of a scene showing objects from various viewing angles;
defining bounding volumes around visible object and associating a label to each bounding volume;
fitting ellipses to the boxes, wherein an ellipse has an axis parallel to a corresponding bounding volume;
building an ellipsoid cloud from the ellipses and projection matrices; and
reprojecting the ellipsoid cloud in all training images by using ground truth projection matrices, wherein ellipses represent ground truth data for training ellipse prediction neural network.

**Patentansprüche**

1. Vorrichtung, die Folgendes umfasst

Mittel zum Empfangen (1010) eines entzerrten Fischaugenbildes;
Mittel zum Detektieren (1020) von einem oder mehreren Objekten im entzerrten Fischaugenbild und Anzeigen des einen oder der mehreren Objekte mit einem entsprechenden Begrenzungsvolumen;
Mittel zum Vorhersagen (1030) einer Ellipse in jedem Begrenzungsvolumen;
Mittel zum Schätzen (1040) einer relativen Pose für jedes des einen oder der mehreren detektierten Objekte auf Basis der entsprechenden Ellipsen unter Verwendung einer Ellipsoid-Ellipse-Einschränkung, wobei ein Projektionskegel eines Ellipsoids zum Annähern an ein virtuelles dreidimensionales Objekt verwendet wird und sich eine Ellipse einer Bildebene für das virtuelle dreidimensionale Objekt annähert;
Mittel zum Schätzen (1050) einer umgekehrten Tiefe für das eine oder die mehreren Objekte auf Basis der relativen Posen;
Mittel zum Schätzen (1060) einer objektbasierten Normalen, die Folgendes umfassen
Mittel zum Laden von Punkten, die zu einem Objekt gehören;
Mittel zum Extrahieren einer entsprechenden umgekehrten Tiefe der Punkte;
Mittel zum Schätzen einer Normalen für jeden der Punkte unter Verwendung einer Nächster-Nachbar-Suche mit einem Kovarianzanalysealgorithmus und
Mittel zum Auswählen einer Normalen, die auf einem Blickpunkt eines Betrachters ausgerichtet ist, aus mehreren geschätzten Normalen eines Objekts und
Mittel zum Erzeugen (1070) einer Platzierung für eine dreidimensionale bewusste Überlagerung auf Basis der ausgewählten Normalen.

2. Vorrichtung nach Anspruch 1, die ferner ein oder mehrere neuronale Faltungsnetzwerke zum Durchführen der Objektdetektion umfasst.

3. Vorrichtung nach Anspruch 1 oder 2, wobei das entzerrte Fischaugenbild ein Fischaugenbild ist, bei dem eine Linsenverzerrung entzerrt oder entfernt wurde.

4. Vorrichtung nach einem der Ansprüche 1 bis 3, die zum Extrahieren von Merkmalen um die Ellipse ferner Mittel zum Erzeugen einer Einbettungsmaske auf Basis einer Distanzfunktion umfasst.

5. Vorrichtung nach einem der Ansprüche 1 bis 4, die ferner Mittel zum Messen einer Position einer Kamera und Mittel zum Verwenden der Position der Kamera beim Schätzen der relativen Pose umfasst.

6. Vorrichtung nach einem der Ansprüche 1 bis 5, wobei die Vorrichtung mit Trainingsdaten trainiert wurde, die durch Folgendes erzeugt wurden

Mittel zum Entzerren von Fischaugenbildern;

Mittel zum Auswählen eines Satzes von entzerrten Fischaugenbildern einer Szene, in der Objekte aus verschiedenen Betrachtungswinkeln gezeigt werden;

Mittel zum Definieren von Begrenzungsvolumina um ein sichtbares Objekt und zum Verknüpfen eines Labels mit jedem Begrenzungsvolumen;

Mittel zum Einsetzen von Ellipsen in die Begrenzungsvolumina, wobei eine Ellipse eine Achse parallel zu einem entsprechenden Begrenzungsvolumen aufweist;

Mittel zum Erstellen einer Ellipsoidwolke aus den Ellipsen und Projektionsmatrices und

Mittel zum Reprojizieren der Ellipsoidwolke in allen Trainingsbildern unter Verwendung von Grundwahrheitsprojektionsmatrices, wobei Ellipsen Grundwahrheitsdaten zum Trainieren von neuronalen Ellipsenvorhersagenetzwerken repräsentieren.

7.   Vorrichtung nach Anspruch 6, die ferner Mittel zum Feinabstimmen einer Objektdetektion unter Verwendung der definierten Begrenzungsvolumina als Grundwahrheit umfassen.

8.   Vorrichtung nach einem der Ansprüche 1 bis 7, wobei das Begrenzungsvolumen eine Begrenzungsbox ist.

9.   Verfahren, das Folgendes umfasst:

Empfangen (1010) eines entzerrten Fischaugenbildes;

Detektieren (1020) von einem oder mehreren Objekten im entzerrten Fischaugenbild und Anzeigen des einen oder der mehreren Objekte mit einem entsprechenden Begrenzungsvolumen;

Vorhersagen (1030) einer Ellipse in jedem Begrenzungsvolumen;

Schätzen (1040) einer relativen Pose für jedes des einen oder der mehreren detektierten Objekte auf Basis von entsprechenden Ellipsen unter Verwendung einer Ellipsoid-Ellipse-Einschränkung, wobei ein Projektionskegel eines Ellipsoids zum Annähern an ein virtuelles dreidimensionales Objekt verwendet wird und sich eine Ellipse einer Bildebene für das virtuelle dreidimensionale Objekt annähert;

Schätzen (1050) einer umgekehrten Tiefe für das eine oder die mehreren Objekte auf Basis der relativen Posen;

Schätzen (1060) einer objektbasierten Normalen, was Folgendes umfasst

Laden von Punkten, die zu einem Objekt gehören;

Extrahieren einer entsprechenden umgekehrten Tiefe der Punkte;

Schätzen einer Normalen für jeden der Punkte unter Verwendung einer Nächster-Nachbar-Suche mit einem Kovarianzanalysealgorithmus und

Auswählen einer Normalen, die auf einem Blickpunkt eines Betrachters ausgerichtet ist, aus mehreren geschätzten Normalen eines Objekts und

Erzeugen (1070) einer Platzierung für eine dreidimensionale bewusste Überlagerung auf Basis der ausgewählten Normalen.

10.  Verfahren nach Anspruch 9, wobei eine Objektdetektion von einem oder mehreren neuronalen Faltungsnetzwerken durchgeführt wird.

11.  Verfahren nach Anspruch 9 oder 10, wobei das Verfahren mit Trainingsdaten trainiert wurde, die durch Folgendes erzeugt wurden

Entzerren von Fischaugenbildern;

Auswählen eines Satzes von entzerrten Fischaugenbildern einer Szene, in der Objekte aus verschiedenen Betrachtungswinkeln gezeigt werden;

Definieren von Begrenzungsvolumina um ein sichtbares Objekt und Verknüpfen eines Labels mit jedem Begrenzungsvolumen;

Einsetzen von Ellipsen in die Boxen, wobei eine Ellipse eine Achse parallel zu einem entsprechenden Begrenzungsvolumen aufweist;

Erstellen einer Ellipsoidwolke aus den Ellipsen und Projektionsmatrices und

Reprojizieren der Ellipsoidwolke in allen Trainingsbildern unter Verwendung von Grundwahrheitsprojektionsmatrices, wobei Ellipsen Grundwahrheitsdaten zum Trainieren von neuronalen Ellipsenvorhersagenetzwerken repräsentieren.

**Revendications**

1. Appareil, comprenant

   des moyens pour recevoir (1010) une image fisheye rectifiée ;
   des moyens pour détecter (1020) un ou plusieurs objets à partir de l'image fisheye rectifiée et indiquer les un ou plusieurs objets avec un volume de délimitation correspondant ;
   des moyens pour prédire (1030) une ellipse à l'intérieur de chaque volume de délimitation ;
   des moyens pour estimer (1040) une pose relative pour chacun des un ou plusieurs objets détectés sur la base des ellipses correspondantes en utilisant une contrainte ellipsoïde-ellipse, dans lequel un cône de projection d'un ellipsoïde est utilisé pour approximer un objet tridimensionnel virtuel, et une ellipse approxime un plan d'image pour l'objet tridimensionnel virtuel ;
   des moyens pour estimer (1050) une profondeur inverse pour lesdits un ou plusieurs objets sur la base des poses relatives ;
   des moyens pour estimer (1060) une normale basée sur un objet comprenant
   des moyens pour charger des points appartenant à un objet ;
   des moyens pour extraire la profondeur inverse correspondante des points ;
   des moyens pour estimer une normale pour chacun des points en utilisant une recherche du plus proche voisin avec un algorithme d'analyse de covariance ; et
   des moyens pour sélectionner une normale qui s'aligne vers le point de vue d'un observateur dans de multiples normales estimées d'un objet ; et
   des moyens pour générer (1070) un emplacement pour une superposition tridimensionnelle consciente sur la base de la normale sélectionnée.

2. Appareil selon la revendication 1, comprenant en outre un ou plusieurs réseaux neuronaux convolutifs pour effectuer la détection d'objet.

3. Appareil selon la revendication 1 ou 2, dans lequel l'image fisheye rectifiée est une image fisheye dans laquelle une distorsion de lentille a été rectifiée ou supprimée.

4. Appareil selon l'une des revendications 1 à 3, comprenant en outre des moyens pour générer un masque d'intégration sur la base d'une fonction de distance pour extraire des caractéristiques autour de l'ellipse.

5. Appareil selon l'une des revendications 1 à 4, comprenant en outre des moyens pour mesurer une position d'une caméra, et des moyens pour utiliser la position de la caméra dans l'estimation de la pose relative.

6. Appareil selon l'une des revendications 1 à 5, dans lequel l'appareil a été entraîné avec des données d'entraînement qui sont générées par

   des moyens pour rectifier des images fisheye ;
   des moyens pour sélectionner un ensemble d'images fisheye rectifiées d'une scène montrant des objets à partir de différents angles de vue ;
   des moyens pour définir des volumes de délimitation autour d'objets visibles et pour associer une étiquette à chaque volume de délimitation ;
   des moyens pour ajuster des ellipses aux volumes de délimitation, dans lequel une ellipse a un axe parallèle à un volume de délimitation correspondant ;
   des moyens pour construire un nuage ellipsoïde à partir des ellipses et de matrices de projection ; et
   des moyens pour reprojeter le nuage ellipsoïde dans toutes les images d'entraînement en utilisant des matrices de projection de vérité terrain, dans lequel les ellipses représentent des données de vérité terrain pour entraîner un réseau neuronal de prédiction d'ellipses.

7. Appareil selon la revendication 6, comprenant en outre des moyens pour effectuer un accord de précision d'une détection d'objet en utilisant les volumes de délimitation définis comme vérité terrain.

8. Appareil selon l'une des revendications 1 à 7, dans lequel le volume de délimitation est une boîte englobante.

9. Procédé, comprenant les étapes suivantes :

recevoir (1010) une image fisheye rectifiée ;

détecter (1020) un ou plusieurs objets à partir de l'image fisheye rectifiée et indiquer les un ou plusieurs objets avec un volume de délimitation correspondant ;

prédire (1030) une ellipse à l'intérieur de chaque volume de délimitation ;

estimer (1040) une pose relative pour chacun des un ou plusieurs objets détectés sur la base des ellipses correspondantes en utilisant une contrainte ellipsoïde-ellipse, dans lequel un cône de projection d'un ellipsoïde est utilisé pour approximer un objet tridimensionnel virtuel, et une ellipse approxime un plan d'image pour l'objet tridimensionnel virtuel ; estimer (1050) une profondeur inverse pour lesdits un ou plusieurs objets sur la base des poses relatives ;

estimer (1060) une normale basée sur un objet comprenant les opérations suivantes

charger des points appartenant à un objet ;

extraire la profondeur inverse correspondante des points ;

estimer une normale pour chacun des points en utilisant une recherche du plus proche voisin avec un algorithme d'analyse de covariance ; et

sélectionner une normale qui s'aligne vers le point de vue d'un observateur dans de multiples normales estimées d'un objet ; et

générer (1070) un emplacement pour une superposition tridimensionnelle consciente sur la base de la normale sélectionnée.

10. Procédé selon la revendication 9, dans lequel la détection d'objet est effectuée par un ou plusieurs réseaux neuronaux convolutifs.

11. Procédé selon la revendication 9 ou 10, dans lequel le procédé a été entraîné à l'aide de données d'entraînement qui sont générées

en rectifiant des images fisheye ;

en sélectionnant un ensemble d'images fisheye rectifiées d'une scène montrant des objets à partir de différents angles de vue ;

en définissant des volumes de délimitation autour d'objets visibles et associant une étiquette à chaque volume de délimitation ;

en ajustant les ellipses aux boîtes, dans lequel une ellipse a un axe parallèle à un volume de délimitation correspondant ;

en construisant un nuage ellipsoïde à partir des ellipses et de matrices de projection ; et

en reprojetant le nuage ellipsoïde dans toutes les images d'entraînement en utilisant des matrices de projection de vérité terrain, dans lequel les ellipses représentent des données de vérité terrain pour entraîner un réseau neuronal de prédiction d'ellipses.

Fig. 1b

Fig. 1a

Fig. 2b

Fig. 2a

310

2D Viewport

3D objects related to the virtual camera view (360 video)

Planes and normal vectors of each object (e.g., boxes)

Two bounding sphere example from 2 detected objects

Fig. 3

Fig. 4

Fig. 5a

Fig. 5b

Fig. 5c

Fig. 6

EP 4 303 817 B1

Fig. 7b

Example Image

Fig. 7a

(a)

Reference embedding
function

Non-Reference
embedding function

(b)

Fig. 8

EP 4 303 817 B1

Fig. 9

EP 4 303 817 B1

```
┌─────────────────────────────────────────────────────────┐
│         receiving a corrected fisheye image              │  ⌇ 1010
└─────────────────────────────────────────────────────────┘
                          │
                          ▼
┌─────────────────────────────────────────────────────────┐
│ detecting one or more objects from the corrected fisheye │
│ image and indicating the one or more objects with a      │  ⌇ 1020
│ corresponding bounding volume                            │
└─────────────────────────────────────────────────────────┘
                          │
                          ▼
┌─────────────────────────────────────────────────────────┐
│        predicting an ellipse within each bounding        │  ⌇ 1030
│                        volume                            │
└─────────────────────────────────────────────────────────┘
                          │
                          ▼
┌─────────────────────────────────────────────────────────┐
│ estimating a relative pose for detected objects based on │  ⌇ 1040
│            the corresponding ellipses                    │
└─────────────────────────────────────────────────────────┘
                          │
                          ▼
┌─────────────────────────────────────────────────────────┐
│  estimating an inverse depth for objects based on the    │  ⌇ 1050
│                    relative poses                        │
└─────────────────────────────────────────────────────────┘
                          │
                          ▼
┌─────────────────────────────────────────────────────────┐
│              estimating object-based normal              │  ⌇ 1060
└─────────────────────────────────────────────────────────┘
                          │
                          ▼
┌─────────────────────────────────────────────────────────┐
│  generating a placement for a three-dimensional aware    │  ⌇ 1070
│                        overlay                           │
└─────────────────────────────────────────────────────────┘
```

Fig. 10

Fig. 11

**EP 4 303 817 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011234584 A

- WO 2021105748 A

**Non-patent literature cited in the description**

- **GAUDILLIERE VINCENT et al.** *Perspective-2-Ellipsoid: Bridging the Gap Between Object Detections and 6-DoF Camera Pose*, 27 June 2020
- **ZINS MATTHIEU et al.** *Object-Based Visual Camera Pose Estimation From Ellipsoidal Model and 3D-Aware Ellipse Prediction*, 07 March 2022

- **M. ZINS** ; **G. SIMON** ; **M. O. BERGER**. 3D-Aware Ellipse Prediction for Object-Based Camera Pose Estimation. *2020 International Conference on 3D Vision (3DV)*, 2020, 281-290
- **COSIMO RUBINO** ; **MARCO CROCCO** ; **ALESSIO DEL BUE**. 3D Object Localisation from Multi-View Image Detections. *2018 IEEE Transactions on Pattern Analysis and Machine Intelligence*, 01 June 2018, vol. 40 (6)